Europäisches Patentamt

European Patent Office

Office européen des brevets

(19)

(11) **EP 0 688 437 B1**

(12) **FASCICULE DE BREVET EUROPEEN**

(45) Date de publication et mention
de la délivrance du brevet:
**16.04.1997 Bulletin 1997/16**

(21) Numéro de dépôt: **94904221.2**

(22) Date de dépôt: **11.01.1994**

(51) Int Cl.⁶: **G01S 15/89**

(86) Numéro de dépôt international:
**PCT/FR94/00032**

**WO 94/20865 (15.09.1994 Gazette 1994/21)**

(54) **SONAR POUR DETECTER LES OBJETS ENFOUIS**

**VORRICHTUNG ZUM AUFSPÜREN IM BODEN EINGEBETTETER OBJEKTE**

**SONAR FOR SENSING BURIED OBJECTS**

(84) Etats contractants désignés:
**DE GB**

(30) Priorité: **09.03.1993 FR 9302695**

(43) Date de publication de la demande:
**27.12.1995 Bulletin 1995/52**

(73) Titulaire: **THOMSON-CSF**
**75008 Paris (FR)**

(72) Inventeur: **LABIAU, Christian**
**F-92402 Courbevoie Cédex (FR)**

(74) Mandataire: **Desperrier, Jean-Louis et al**
**THOMSON-CSF-S.C.P.I.,**
**13, Avenue du Président**
**Salvador Allende**
**94117 Arcueil Cédex (FR)**

(56) Documents cités:
**EP-A- 0 070 494**    **US-A- 4 870 628**
**US-A- 5 033 029**

# EP 0 688 437 B1

## Description

La présente invention se rapporte aux sonars qui permettent de détecter des objets enfouis dans le sol du fond des mers, ou plus généralement d'une étendue d'eau quelconque, par la détection de l'écho d'ondes acoustiques émises par cet appareil.

La principe des sonars est bien connu. Il consiste à émettre une onde acoustique à une fréquence adaptée à la portée et à la précision souhaitée. Cette onde acoustique se propage dans le milieu liquide où elle est émise et peut éventuellement pénétrer à une certaine profondeur dans le sol recouvert par ce milieu liquide. Les objets solides rencontrés renvoient l'onde vers l'appareil émetteur qui comprend aussi un dispositif récepteur permettant de détecter ces échos et de les localiser en fonction de la durée du trajet des ondes et de l'orientation des faisceaux émis et reçus. Les ondes à haute fréquence, et donc à courte longueur d'onde, sont plus faciles à focaliser et permettent d'utiliser des antennes acoustiques plus petites. Elles permettent également une plus grande précision sur la localisation en distance, en relation avec la longueur d'onde. Par contre leur atténuation est beaucoup plus grande dans l'eau et la portée est réduite en conséquence, sauf à utiliser des puissances excessives difficilement concevables.

Il arrive fréquemment que les objets reposant sur le fond de la mer et que l'on cherche à repérer avec les sonars soient en fait enfouis sous les sédiments accumulés au cours des ans, en particulier lorsqu'il s'agit d'épaves. Il serait donc très utile de pouvoir utiliser des ondes acoustiques de grande longueur d'onde dans ce but et de les émettre à partir d'un poisson remorqué à proximité du fond. Ceci se heurte au problème de la dimension des antennes qui est difficilement compatible dans le cas de grandes longueurs d'onde avec les dimensions nécessairement réduites d'un poisson remorqué

Les ondes acoustiques à basse fréquence, et donc à grande longueur d'onde, présentent l'avantage d'une atténuation beaucoup moins grande et donc une portée beaucoup plus importante. En outre, et corrélativement, elles pénêtrent plus profondément dans les sédiments sous-marins, ce qui permet de détecter plus facilement des objets enfouis dans ces sédiments. En contrepartie elles nécessitent l'emploi d'antennes acoustiques d'émission et de réception de grandes dimensions, pour pouvoir focaliser correctement les ondes émises et obtenir la résolution angulaire voulue.

On connaît un procédé permettant de combiner les avantages des ondes acoustiques de courte et de grande longueur d'onde. Ce procédé, appelé mode paramétrique, consiste à émettre simultanément deux faisceaux d'ondes acoustiques à haute fréquence dirigés dans la même direction, en utilisant de préférence les mêmes transducteurs d'émission. En raison des non-linéarités du fluide, l'eau en général, propagateur, ces ondes génèrent des produits d'intermodulation dont celui à la plus faible fréquence, correspondant à la différence des fréquences des ondes émises présente une longueur d'onde beaucoup plus faible que celles des faisceaux d'origine. Cependant cette onde ainsi générée bénéficie des propriétés de focalisation et de directivité des faisceaux à haute fréquence qui l'ont générée, et qui ont pu être émis à partir d'antennes acoustiques de faibles dimensions. Les non-linéarités de l'eau étant faibles le rendement du produit d'intermodulation est lui-même faible, mais compte tenu des différences d'atténuation le gain global est positif. L'onde à basse fréquence ainsi générée peut pénétrer dans les sédiments, alors que les ondes à haute fréquence génératrices y sont absorbées.

A titre d'exemple, on utilise des fréquences primaires de l'ordre de 120 kHz, qui génèrent par soustraction une fréquence secondaire de l'ordre de 15 kHz dont l'atténuation par rapport à celle des fréquences primaires permet de pénétrer les sédiments du fond marin sur une profondeur d'environ 2m lorsque ce fond est situé à environ 10m de l'émetteur acoustique du sonar, en dépit d'une atténuation de conversion de l'ordre de -30 dB.

On connaît de la demande de brevet européen 0070494 un dispositif de sonar paramétrique porté par poisson remorqué à une faible altitude au-dessus du fond de la mer. Les signaux des voies d'émission en site sont émis selon des rafales successives destinées à éviter le mélange des échos à la réception, ce qui permet d'augmenter la vitesse du poisson. Toutefois, les antennes d'émission et de réception sont contenues dans le corps du poisson, ce qui limite leurs dimensions et empêchent d'avoir des voies d'émission et de réception suffisamment bien délimitées. En outre la séquence d'émission dans les rafales n'est pas particulièrement optimisée.

Pour résoudre ce problème, l'invention propose un sonar selon la revendication 1.

D'autres particularités et avantages de l'invention apparaîtront clairement dans la description suivante, faite à titre d'exemple non limitatif en regard des figures annexées qui représentent :

- la figure 1, une vue de profil d'un poisson portant les antennes d'un sonar selon l'invention ;
- la figure 2, une vue en coupe de ce poisson ;
- la figure 3, une vue en plan du fond marin et des surfaces insonifiées par les faisceaux sonar sur celui-ci ;
- la figure 4, un diagramme de rayonnement en réception et en site ;
- la figure 5, une vue en site de deux faisceaux d'émission symétriques babord/tribord;
- la figure 6, un diagramme amplitude/site d'un faisceau d'émission ;
- la figure 7, un diagramme temporel d'émission/réception.

- la figure 8, une vue en site de deux faisceaux d'émission sur un même bord ; et
- la figure 9, un diagramme temporel d'émission d'une même rafale.

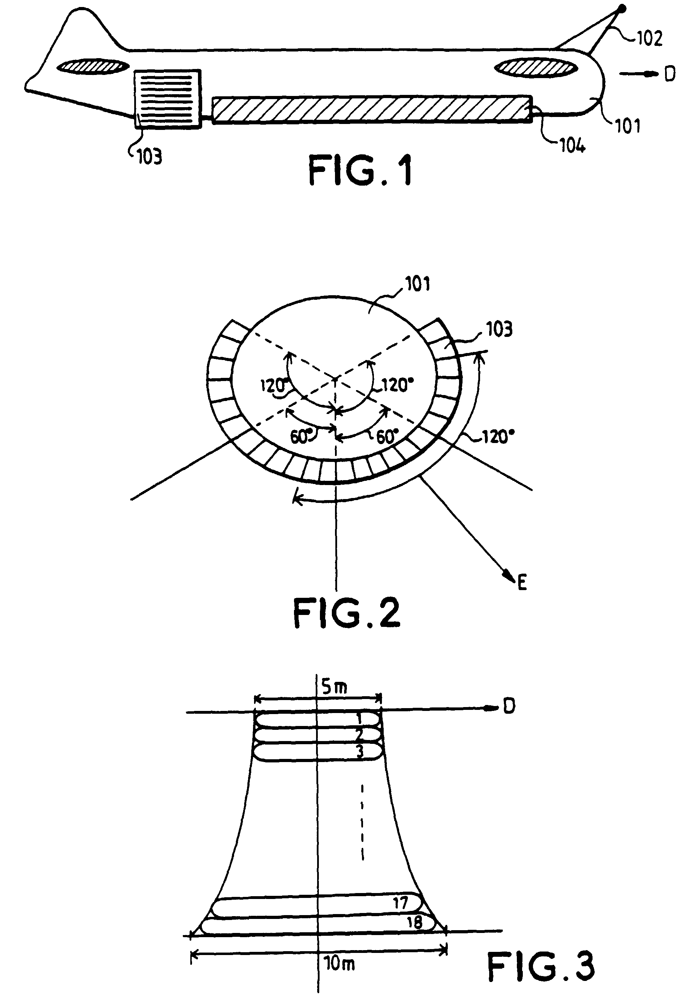

On a représenté sur la figure 1 une vue de côté d'un poisson remorqué comportant un sonar selon l'invention.

Ce poisson est composé d'un corps 101, d'un diamètre par exemple de 30 cm pour une longueur de 3m, muni d'ailerons et d'une dérive destinée à maintenir sa stabilité. Il comporte en outre une ferrure de remorquage 102 permettant de le tracter sous les eaux. La position de cette ferrure et l'action des ailerons permettent d'obtenir une immersion à une profondeur voulue, éventuellement ajustable par des moyens non décrits mais connus. Le poisson avance donc dans une direction D parallèle à son axe longitudinal, à une altitude au-dessus du fond de la mer de l'ordre de 10m et pouvant par exemple varier entre 4 et 15 m.

Ce poisson comporte à l'arrière une antenne d'émission cylindrique 103 qui vient entourer le corps du poisson sur un secteur d'environ 240° centré vers le bas comme représenté en coupe sur la figure 2. Ceci permet de définir, en sélectionnant par des moyens électroniques appropriés et d'une manière connue les transducteurs d'émission situés dans un secteur d'ouverture de 120° pouvant glisser d'un bord extrême de l'antenne d'émission à l'autre bord extrême, un faisceau d'émission ayant une direction d'émission E pouvant varier dans un secteur d'émission utile de 120° centré sur la verticale vers le bas. Le cas échéant on pourra utiliser une antenne d'émission circulaire de type courant et utilisée par ailleurs pour d'autres besoins formant un anneau complet et dont on n'utilisera que les transducteurs situés sur le secteur de 240°.

Le poisson supporte en outre deux antennes de réception latérales linéaire 104, d'une longueur d'environ 2 m, s'étendant le long des deux côtés de la coque vers le bas de celle-ci et adaptées à recevoir les ondes acoustiques basse fréquence renvoyées par les objets à détecter.

Le poisson peut en outre comporter d'autres appareillages qui sortent du cadre de l'invention, en particulier un sonar haute fréquence dont les antennes sont situées elles aussi latéralement le long de la coque, ainsi que des appareils de navigation pour maintenir l'assiette et l'altitude du sonar en mesurant éventuellement les changements de ces paramètres pour en tenir compte dans le traitement des signaux sonars.

Dans l'art antérieur, l'antenne d'émission paramétrique émettait des faisceaux étroits angulairement, permettant de faire une cartographie du fond de la mer. Pour éviter le chevauchement des faisceaux et les inconvénients correspondants, ceux-ci étaient émis les uns après les autres avec une séparation temporelle suffisante pour que tous les échos puissent être reçus avant l'émission du faisceau suivant. Ceci limitait bien entendu considérablement la vitesse d'avancement du poisson pour avoir une couverture complète du terrain. Dans la pratique cette vitesse ne pouvait pas dépasser 4 noeuds, ce qui est faible.

Selon l'invention l'antenne d'émission paramétrique émet des faisceaux dont l'ouverture en gisement $2\theta_3$ (plan contenant la direction D selon laquelle le poisson avance) est égale par exemple à 20°, et l'ouverture en site $2\varphi_3$ (plan transversal à la direction D) est égale par exemple à 3,2°. Ces faisceaux sont donc fortement dissymétriques et leur impact sur le fond de la mer a une forme grossièrement en ellipse, comme représenté sur la figure 3. Les différents faisceaux sont contigus et correspondent donc à des zones elles-mêmes contiguës sur le fond, numérotées sur la figure de 1 à 18. En effet compte tenu de l'ouverture en site il faut utiliser dans cet exemple numérique 18 faisceaux sur chaque bord pour couvrir entièrement les secteurs de 60° de large sur chaque bord définis plus haut.

Le premier secteur, numéro 1, est situé sensiblement à la verticale du poisson, et le 18ème à l'extrémité de la zone insonifiée. Comme on s'éloigne de l'antenne d'émission au fur et à mesure que l'on avance dans l'ordre croissant des numéros, la zone insonifiée s'élargie de plus en plus, compte tenu de l'ouverture en gisement. Ainsi pour une altitude H au-dessus du fond de la mer, égale par exemple selon une valeur courante à 15m, le faisceau n° 1 a une longueur sensiblement égale à 5 m et le faisceau n° 18 une longueur sensiblement égale à 10 m.

Comme on l'a vu, il faut émettre les 18 faisceaux sur chaque bord (la figure 3 ne représente qu'un bord) pour couvrir tout le secteur en site de 60° sur ce bord. Afin de pouvoir tracter le poisson à une vitesse maximale, l'invention propose pour diminuer la durée totale de la récurrence correspondant à l'émission de ces 18 faisceaux, de répartir ceux-ci en six rafales de trois faisceaux séparés spatialement en site et en temps pour les faisceaux d'une même rafale et en temps pour les rafales successives.

Les faisceaux seront répartis spatialement de manière à être entrelacés. Dans cet exemple de réalisation la répartition des faisceaux dans les rafales pour un côté sera :

- rafale 1: faisceaux 1-7-13
- rafale 2 : faisceaux 2-8-14
- rafale 3 : faisceaux 3-9-15
- rafale 4 : faisceaux 4-10-16
- rafale 5 : faisceaux 5-11-17
- rafale 6 : faisceaux 6-12-18.

Il faut pouvoir séparer à la réception les échos correspondant aux faisceaux babord et aux faisceaux tribord.

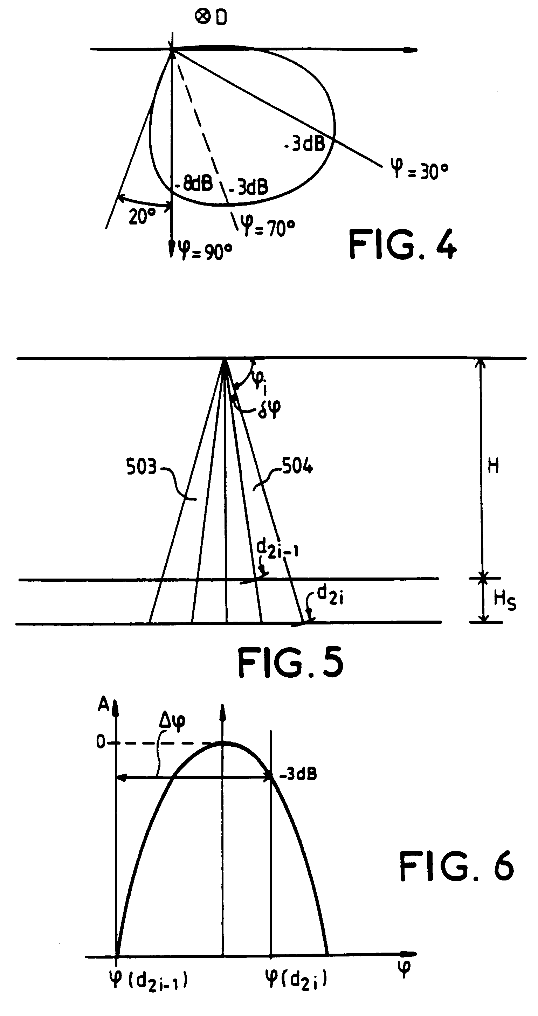

Pour l'antenne tribord, le diagramme de réception est représenté sur la figure 4 et pour l'antenne babord le diagramme est symétrique. Pour les faisceaux les plus éloignés de la verticale, les diagrammes de directivité de chacune des deux antennes de réception effectuent cette séparation.

Dans cet exemple le diagramme permet de séparer les échos provenant des faisceaux situés entre les angles de site $\varphi = 30°$ (par rapport à l'horizontale) et $\varphi = 70°$, c'est-à-dire dans l'exemple décrit les faisceaux 8 à 18.

Pour les faisceaux restants, compris donc dans un angle de site d'ouverture 40° centré sur la verticale, et qui sont dans l'exemple décrit les faisceaux 1 à 7 de chaque bord, les diagrammes se recouvrent et on utilise une séparation temporelle à l'émission des impulsions de manière à ce que les échos reçus sur un bord ne puissent pas être confondus avec ceux reçus sur l'autre bord.

Pour cela il faut donc attendre que tous les échos provenant d'un faisceau émis à tribord dans cet angle de site compris entre 70° et 90° et correspondant à des objets enfouis dans le sédiment dans la limite de portée du sonar, soient reçus avant d'émettre à babord dans un autre faisceau compris entre 70° et 90°.

On ne s'intéresse en effet pour le sonar paramétrique qu'aux échos provenant des objets enfouis dans le sédiment. Les échos provenant éventuellement d'objets situés entre deux eaux seront repérés par d'autres moyens, par un sonar à haute fréquence porté par le poisson par exemple, et pourront ainsi être éliminés dans le système de traitement des échos du sonar à basse fréquence afin de supprimer les ambiguïtés.

Dans la suite on mettra en indice i les angles $\varphi$ de manière que $\varphi_i = 90° - i \times 2\varphi_3$. Pour un faisceau $\varphi_i$ correspond à 2 distances $d_{2i-1}$ et $d_{2i}$.

On a représenté sur la figure 5 deux faisceaux 503 et 504 babord et tribord compris dans le secteur site -70°, 70°. Dans cette figure les rayons limites de ces faisceaux seront définis plus loin. Le faisceau 503 émis par exemple à babord doit être séparé du faisceau 504 émis à tribord. Il est nécessaire que le signal éventuellement réémis par un objet enfoui à une profondeur Hs dans le sédiment, sur un rayon correspondant à la distance $d_{2i}$ ne soit pas couvert par le signal réémis par la surface du fond de la mer (on dit généralement réverbération sur le fond) à une profondeur H par rapport au poisson porteur du sonar, sur un rayon correspondant à la distance $d_{2i-1}$

Pour éviter un tel masquage on considère généralement qu'il est préférable que le niveau du signal de réverbération soit environ de 15 à 20 dB en dessous du niveau du signal utile soit, compte tenu de l'atténuation dans le sédiment, d'environ 55 à 60 dB en dessous du niveau du signal utile.

On sait en effet que le sédiment atténue le signal et que c'est d'ailleurs ce qui limite la portée du sonar dans le sédiment. Si par exemple le coefficient d'atténuation du sédiment est $a_s = 1dB$ par longueur d'onde, on aura une atténuation d'au moins 40 dB (aller + retour) pour une profondeur du sédiment Hs = 2 m (la plus utile généralement) à une fréquence d'émission 15 kHz correspondant à une longueur d'onde de 10 cm dans l'exemple numérique décrit.

L'angle de séparation $\Delta\varphi$ entre les rayons correspondant aux distances $d_0$ et $d_1$ sera donc obtenu par la distance angulaire entre les ouvertures du diagramme d'émission à -3 dB et à -60 dB c'est-à-dire au premier zéro du diagramme. Ceci est représenté sur la figure 6.

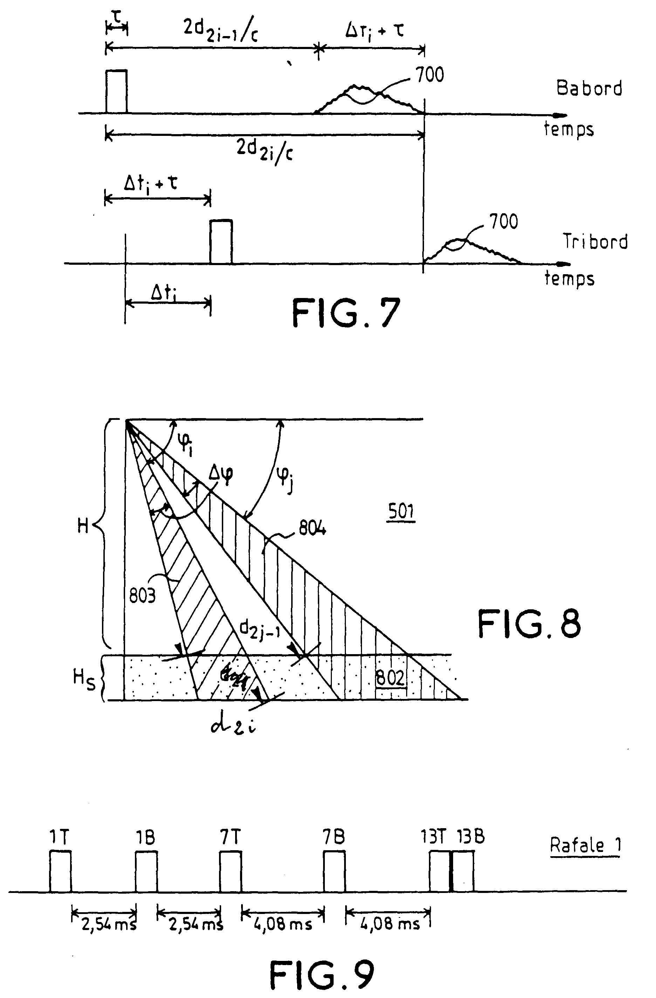

En se reportant à la figure 7, sur laquelle est figuré en 700 la réverbération du fond, la différence de temps entre la fin de la première émission et le début de l'autre est donnée par:

$$(1) \qquad \Delta t_i = 2 \, \frac{(d_{2i} - d_{2i-1})}{c}$$

où c est la vitesse du son dans le sédiment.

Cet écart de temps est plus facile à calculer à partir de H, $H_s$, $\varphi_k$ et $\Delta\varphi$, avec la formule :

$$(2) \quad \Delta t_i = 2 \left( \frac{H + Hs}{\sin \varphi_i} - \frac{H}{\sin(\varphi_i + \Delta\varphi)} \right) \times \frac{1}{c}$$

Ceci permet donc de séparer les échos des faisceaux babord et tribord de même rang, 1 B et 1 T par exemple, pour i = 1.

Le même raisonnement s'applique pour séparer les échos des faisceaux dont le site est inférieur à 70°. Sur la figure 8, on a représenté 2 faisceaux 803, 804 d'un même côté, babord ou tribord ; la largeur angulaire $\Delta\varphi$ étant définie comme enseigné précédemment par la figure 6. La réverbération du fond correspondant à la distance $d_{2i-1}$ sur le faisceau 804 ne doit pas venir perturber les échos provenant d'objets situés à la distance $d_{2i}$ sur les faisceau 803.

Pour cela il suffit que à instant d'émission égal, la condition $\frac{2d_{2i-1}}{c} \geq \frac{2d_{2i}}{c}$ soit au moins réalisée, c'est-à-dire $d_{2i-1} \geq d_{2i}$.

Lorsque cette condition est réalisée les impulsions sont émises simultanément. Si cette condition n'est pas réalisée les instants d'émission doivent être séparés de :

$$\Delta t_{ij} = \frac{2(d_i - d_{2j-1})}{c}$$

qui est égale à :

$$\frac{2}{c}\left[ \frac{H + H_s}{\sin \varphi_i} - \frac{H}{\sin(\varphi_i + \Delta_\varphi)} \right]$$

Ces considérations permettent de définir le séquencement des émissions des faisceaux pour chaque rafale. On se place dans le cadre de l'exemple numérique décrit plus haut:

H = 15 m

Hs = 2 m

**largeur faisceau à 3 dB : 3, 2°**

$$\left.\begin{array}{c}\\\\\end{array}\right\} \Delta\varphi = 10,6°$$

**largeur faisceau entre zéros : 18 °**

$\varphi_i$ = 90° - i x 3,2° 1 ≤ i ≤ 18

ceci est aussi valable pour j.

La rafale 1 est celle qui a la durée la plus longue car c'est la seule qui contient 2 faisceaux 1, 7 qui sont verticaux et qu'il faut donc obligatoirement séparer par un décalage temporel à l'émission ($\Delta t_1$ et $\Delta t_7$).

On a :

$\varphi_1$ = 86,8°          $\Delta t_1$ = 2,54 ms

$\varphi_7$ = 67,6°          $\Delta t_7$ = 4,08 ms

En se reportant à la figure 9, la rafale N° 1 commence par l'émission du faisceau 1T suivie à $\Delta t_1$ de l'émission du faisceau 1B, elle-même suivie à $\Delta t_1$ de l'émission du faisceau 7T. L'émission du faisceau 78 se trouve à $\Delta t_7$ de l'émission du faisceau 7T et l'émission du faisceau 13T est à $\Delta t_7$ de celle du faisceau 7B.

Maintenant il faut vérifier si l'écart temporel entre faisceaux d'un même côté est bien respecté. Pour les faisceaux 1 et 7, on a $d_2$ = 17,03 m et d3 = 15,32 m. Puisque $d_{13}$ est inférieur à $d_2$, il faut appliquer un retard entre émissions égal à au moins 2,28 ms. En utilisant pour $\tau$ la valeur courante 0,2 ms, l'intervalle est égal à 5,28 ms et par suite l'intervalle entre 1T et 7T convient. Il en est de même pour les faisceaux 7 et 13 pour lesquels il faut appliquer un retard entre émissions plus faible égal à 1,18 ms. Le retard entre les émissions des faisceaux 7B et 13B est donc assuré et les émissions 13T en 13B peuvent être simultanées. En fait elles sont contigues car il y a des transducteurs communs pour effectuer ces 2 émissions.

La durée totale du cycle d'émission de la rafale doit être inférieure à $\frac{2H}{c}$ pour que tous les échos soient émis avant que la première impulsion soit reçue, afin d'éviter un mélange des signaux dans l'eau.

La durée totale du cycle d'émission de la rafale est égale à 14,44 ms, qui est donc inférieur à $\frac{2H}{c}$ =20 ms.

En ce qui concerne le cycle émission/réception dans sa totalité, la durée pour une rafale est donnée par:

$$\frac{2H}{c\sin \varphi_{max}} + \Sigma\Delta t_i + 6\tau$$

Pour la rafale 1, $\varphi_{max} = \varphi_3$ et on obtient 41,2 ms.

Donc le cycle émission/réception pour les six rafales a une durée maximale sensiblement égale à 6 fois cette valeur, soit environ 250 ms.

Pendant cette durée le poisson, s'il navigue à 10 noeuds, se déplace d'une distance de 1,25 m et compte tenu des dimensions de la surface insonifiée au sol des faisceaux, comme représenté sur la figure 3, en fonction des dimensions de l'exemple numérique choisi. tout objet susceptible de réémettre un écho est insonifié

$$\left(\frac{5}{1,25}\right)$$

quatre fois (quatre coups au but) s'il est situé à la verticale du poisson et

$$\left(\frac{10}{1,25}\right)$$

huit s'il est en limite du secteur insonifié. De tels nombres permettent d'obtenir une détection tout à fait sûre.

Un tel séquencement en six rafales de trois faisceaux est bien adapté jusqu'à une limite inférieure de l'altitude du poisson au-dessus du fond de la mer. Cette limite est d'environ 6 m pour une hauteur de sondage dans le sédiment de 2 m. La valeur de 2 m qui a été retenue est particulièrement adaptée à la détection des mines enfouies, dont on considère qu'elles ne sont plus dangereuses lorsqu'elles sont recouvertes par plus de 2 m de sédiment.

Si l'on utilise une altitude du poisson plus basse, pouvant par exemple être comprise entre 4 et 6 m, on est conduit à adopter un autre conduit à diminuer la vitesse du poisson à une valeur sensiblement égale à 6,7 noeuds.

Pour obtenir une résolution suffisante en gisement on utilise une formation de voies à la réception pouvant par exemple comporter 7 voies dont l'ouverture en gisement , compte tenu de l'angle $2\theta_3$ défini plus haut est égal sensiblement à 3°.

Dans ces conditions la cellule de résolution du sonar correspond à une ouverture de 3° x 3,2°.

Suivant une variante l'antenne de réception est synthétique, c'est-à-dire que son ouverture angulaire $2\theta_3$ est obtenue par une longueur d'antenne qui tient compte de l'avancement du poisson : cette technique est connue et décrite par exemple dans le brevet US 4 987 563 de John E. Gilmour.

Le sonar ainsi décrit permet par rapport à ceux utilisés précédemment une amélioration importante du taux de couverture horaire, obtenu par l'augmentation de la vitesse du poisson, qui peut avancer à 10 noeuds au lieu de 4 précédemment. On pourrait même éventuellement arriver jusqu'à une vitesse de 15 noeuds si les performances hydrodynamiques du poisson le permettaient. Par ailleurs le nombre de coups au but est sensiblement augmenté par rapport à l'art antérieur, ce qui correspond en fait au point de vue traitement du signal à une intégration dont on sait qu'elle augmente le rapport signal à bruit.

## Revendications

1. Sonar pour détecter les objets enfouis sous le fond des eaux, du type comportant une antenne paramétrique d'émission (103) et une antenne de réception (104) toutes deux portées par un poisson (101) destiné à être remorqué à une faible altitude au-dessus du fond de la mer, cette antenne d'émission émettant des voies (1-18) réparties angulairement en site dans un plan transversal à l'axe (D) d'avancement du poisson, ce sonar étant adapté pour émettre les signaux des voies d'émission en site selon des rafales successives en évitant le mélange des échos à la réception, ce qui permet d'augmenter ainsi la vitesse d'avancement du poisson, et les faisceaux correspondant à une rafale étant séparés spatialement en site pour que les faisceaux des rafales successives soient entrelacés pour recouvrir le champ d'exploration du sonar, caractérisé en ce que l'antenne d'émission est conforme au corps sensiblement cylindrique du poisson pour émettre lesdites voies (1-18), en ce que l'antenne de réception est formée de deux antennes latérales s'étendant le long des deux côtés du corps vers le bas de celui-ci, et en ce que le séquencement des faisceaux d'une même rafale de longueur minimale est optimisé en choisissant comme marge temporelle pour deux faisceaux successifs d'une même rafale la différence de temps d'aller-retour correspondant à l'écho prévu le plus lointain du faisceau courant et de l'écho prévu le plus proche du faisceau suivant, ce qui permet d'éviter un mélange entre la réverbération sur le fond de la mer et les échos des objets enfouis dans les sédiments

## EP 0 688 437 B1

**Patentansprüche**

1.  Sonar zum Erfassen von im Boden von Gewässern vergrabenen Gegenständen des Typs mit einer parametrischen Sendeantenne (103) und einer Empfangsantenne (104), die beide von einem Schwimmkörper (101) getragen werden, der dazu vorgesehen ist, in geringer Höhe über dem Meeresboden geschleppt zu werden, wobei diese Sendeantenne auf Kanälen (1-18) aussendet, die in Höhenwinkelrichtung in einer Ebene, die zur Achse (D) der Vorwärtsbewegung des Schwimmkörpers transversal ist, verteilt sind, wobei dieses Sonar so beschaffen ist, das es die Signale der Höhenwinkel-Sendekanäle in aufeinanderfolgenden Stößen aussendet, wodurch das Gemisch der Echos beim Empfang vermieden wird, was somit die Erhöhung der Geschwindigkeit der Vorwärtsbewegung des Schwimmkörpers ermöglicht, und wobei die einem Stoß entsprechenden Strahlenbündel in Höhenrichtung räumlich getrennt sind, damit die Strahlenbündel der aufeinanderfolgenden Stöße verschachtelt sind, damit sie das Erkundungsfeld des Sonars abdecken, dadurch gekennzeichnet, daß die Sendeantenne an das im wesentlichen zylindrische Gehäuse des Schwimmkörpers angepaßt ist, um die Kanäle (1-18) auszusenden, daß die Empfangsantenne aus zwei seitlichen Antennen gebildet ist, die sich längs der zwei Seiten des Gehäuses zu seiner Unterseite erstrecken, und daß die Aufeinanderfolge der Strahlenbündel desselben Stoßes mit minimaler Länge optimiert wird, indem als zeitlicher Abstand für zwei aufeinanderfolgende Strahlenbündel desselben Stoßes die Zeitdifferenz zum Hin- und Rücklauf, die dem am weitesten entfernten Echo des momentanen Strahlenbündels und dem nähesten Echo des folgenden Strahlenbündels entspricht, gewählt wird, was ermöglicht, ein Gemisch aus der Reflexion am Meeresboden und aus den Echos der in den Sedimenten vergrabenen Gegenstände zu vermeiden.

**Claims**

1.  Sonar for sensing objects buried under the marine bed, of the type including a parametric transmission antenna (103) and a reception antenna (104) both carried by a fish (101) intended to be towed at a low altitude above the seabed, this transmission antenna transmitting channels (1-18) angularly distributed in elevation in a plane transverse to the axis (D) of advance of the fish, this sonar being adapted to transmit the signals of the transmission channels in elevation according to successive bursts while avoiding the mixing of echoes on reception, thus making it possible to increase the speed of advance of the fish, and the beams corresponding to a burst being separated spatially in elevation so that the beams of the successive bursts are interleaved so as to cover the field of exploration of the sonar, characterized in that the transmission antenna matches the shape of the substantially cylindrical body of the fish in order to transmit the said channels (1-18), in that the reception antenna is formed by two lateral antennas extending along the two sides of the body towards the bottom thereof, and in that the sequencing of the beams of one and the same burst of minimum length is optimized by choosing as time margin for two successive beams of one and the same burst the difference in out/back time corresponding to the furthest envisaged echo of the current beam and the nearest envisaged echo of the next beam, this making it possible to avoid a mixing between the reverberation on the seabed and the echoes from the objects buried in sediments.

FIG.1

FIG.2

FIG.3

8

⊗ 0

-3dB

-8dB -3dB

$\varphi = 30°$

20°

$\varphi = 70°$

$\varphi = 90°$

## FIG. 4

$\varphi_i$

$\delta\varphi$

503 504

H

$d_{2i-1}$

$d_{2i}$

$H_S$

## FIG. 5

A

$\Delta\varphi$

0

-3dB

$\varphi(d_{2i-1})$ $\varphi(d_{2i})$ $\varphi$

## FIG. 6

FIG.7

FIG.8

FIG.9